# EUROPÄISCHE PATENTSCHRIFT

(11) **EP 2 547 961 B1**
(45) Veröffentlichungstag und Bekanntmachung des Hinweises auf die Patenterteilung: **19.02.2020**
(21) Anmeldenummer: 10716272.9
(22) Anmeldetag: 19.03.2010
(51) Int. Cl.: F02C 3/30, F23D 11/10

(54) **VERFAHREN UND SYSTEM ZUM REGELN ODER STEUERN DES BETRIEBSVERHALTENS EINER GASTURBINENVERBRENNUNGSANLAGE**
METHOD AND SYSTEM FOR REGULATING OR CONTROLLING THE OPERATIONAL BEHAVIOR OF A GAS TURBINE COMBUSTION SYSTEM
PROCEDE ET SYSTEME POUR RÉGULER OU COMMANDER LE COMPORTEMENT D'OPÉRATION D'UN SYSTÈME DE COMBUSTION DE TURBINE A GAZ

(43) Veröffentlichungstag der Anmeldung: 23.01.2013
(73) Patentinhaber: Technische Universität Berlin, 10623 Berlin (DE)
(72) Erfinder: PASCHEREIT, Christian Oliver, 14109 Berlin (DE); GÖKE, Sebastian, 13467 Berlin (DE)
(74) Vertreter: Hoffmann, Klaus-Dieter
(86) Internationale Anmeldenummer: PCT/DE2010/000314
(87) Internationale Veröffentlichungsnummer: WO 2011/113400

(56) Entgegenhaltungen:
- WO-A1-00/14451
- DE-A1- 19 520 292
- DE-A1- 19 937 921
- US-A- 4 773 846
- US-A- 5 357 741
- US-A1- 2003 014 959
- US-A1- 2004 088 997
- US-A1- 2006 064 986

## Beschreibung

### Technisches Gebiet

Die Erfindung betrifft ein Verfahren zum Regeln oder Steuern des Betriebsverhaltens einer Gasturbinenverbrennungsanlage mit mindestens einer Verbrennungskammer und mindestens einem in dieser installierten Brenner nach dem Anspruch 1 oder 2.

### Stand der Technik

Die DE 199 37 921 A1 offenbart ein Verfahren und eine Vorrichtung zum Verdampfen eines flüssigen Brennstoffes für einen Brenner, wobei ein flüssiger, nebelförmiger Brennstoff bevor er in den Brenner eingeleitet wird, mit einem inerten Fluid wie Wasserdampf vermischt und durch Erhitzen verdampft wird. Hierbei wird der Wasserdampf, bevor er mit dem Brennstoffnebel vermischt wird, erhitzt, so dass die zur Verdampfung des Brennstoffnebels führende Erhitzung durch die Vermischung des Brennstoffnebels mit dem erhitzten Wasserdampf erfolgt. Zudem kann das Gemisch aus Wasserdampf und Brennstoffdampf, bevor es in den Brenner eingeleitet wird, mit Luft vermischt werden. Als inertes Fluid kann auch Stickstoff-Gas oder ein Stickstoff-Gasgemisch oder ein Edelgas oder ein Edelgasgemisch Verwendung finden. Die bekannten Vorrichtung zum Verdampfen des flüssigen Brennstoffes weist eine einem Brenner vorgeschaltete Verdampfungskammer, die eingangsseitig eine an ein Wasserdampfreservoir angeschlossene Zuführung für die Einleitung von erhitztem Wasserdampf in die Verdampfungskammer besitzt, und eine Zerstäubungseinrichtung, die den Brennstoffnebel in die Verdampfungskammer einleitet. Hierbei erfolgt die zur Verdampfung des Brennstoffnebels führende Erhitzung durch die Vermischung des Brennstoffnebels mit dem erhitztem Wasserdampf. In einem brennernahen Abschnitt der Verdampfungskammer ist an diese eine Luftzuführung angeschlossen, die Luft dem Gemisch aus Wasserdampf und Brennstoffdampf vermischt, bevor die so gebildete Mischung in den Brenner eintritt.

Gemäß der WO 2004/101129 A2 wird beim Betrieb von Gasturbinenverbrennungsanlagen zum Reduzierung von NOₓ- Emissionen und damit einer Senkung der Flammentemperatur über eine Ventilregelung Dampf oder Stickstoff in die erste Verbrennungszone der Brennkammer eingeleitet. Weiterhin geht aus der WO 2004/101129 A2 ein Verfahren als bekannt hervor, bei dem zur Reduktion der NOₓ -Emissionen von Gasturbinen zusätzliche Ströme komprimierter Luft durch Ventile geregelt in die Brennkammer eingeleitet werden, um die Flammentemperatur zu senken. Durch zusätzliches Zuführen von reinem Wasserstoff kann die Flamme bei der reduzierten Temperatur stabilisiert werden, um eine optimale Verbrennung des Treibstoffes zu ermöglichen.

Aus der US 5357741 B1 ist weiterhin ein Verfahren bekannt, bei dem zur Minimierung der CO-Emission einer Gasturbine bei Aufrechterhaltung eines konstanten NOₓ-Levels die Injektion einer genau berechneten Menge Dampf in die Brennkammer der Gasturbine erfolgt. Die eingeleitete Dampfmenge wird entsprechend des Brennstoffzuflusses, der Temperatur der Zuluft, der relativen Feuchte, dem Heizwert des Brennstoffes und der Turbinenlast geregelt und an die entsprechenden Erfordernisse des Prozesses angepasst.

Aus der US 7047748 B2 ist zudem ein Injektionsverfahren zur Reduzierung der NOₓ-Emissionen bei Gasturbinenverbrennungsanlagen bekannt, bei dem mittels einer oder mehrerer Düsen der Treibstoff in sehr feine Tropfen dispergiert wird, um eine schnelle und vollständige Verbrennung zu erreichen. Im Verfahrensablauf unmittelbar anschließend an die Treibstoffeinspritzung erfolgt dann mittels einer oder mehrerer Düsen die Injektion feinster Wassertropfen oder von Dampf in die Verbrennungskammer, wodurch die Gastemperatur gesenkt und die Bildung von NOₓ minimiert wird.

Ferner ist aus der EP 099069 B1 ein Verbrennungssystem zur Reduktion von NOₓ - Emissionen bekannt, bei dem eine Dampfauslassgruppe mit einer Vielzahl um eine Brennstoffleitung derart positionierter Dampfinjektionskanäle vorgesehen ist, dass der Dampf in entsprechend viele einzelne Dampfströme aufgeteilt wird und in die Brennstoffleitung hineinströmt.

Eine gängige Verbrennungstechnologie zeitgemäßer Gasturbinen, die mit Erdgas betrieben werden, ist die vorgemischte oder "Dry-Low-NOₓ" (DLN) Verbrennungskammer, wobei Treibstoff mit Luftüberschuss vor Eintritt in die Verbrennungskammer zur Erzeugung einer mageren Mischung gemischt wird, die bei einer niedrigen Flammentemperatur brennt. Da die NOₓ- Bildung in direkter Beziehung zur Flammentemperatur steht, muss diese zur Unterdrückung von NOₓ-Emissionen gering gehalten werden.

Aus der US2003/0014959 A1 ist ein unter Hochdruck arbeitendes Verfahren zur Krafterzeugung unter Verwendung eines im wesentlichen kein CO und NOₓ enthaltenden Arbeitsfluidums bekannt, das aus einer Mischung von nicht entflammbaren Luftkomponenten, Brennstofferzeugnissen und Dampf besteht. Brennstoff und Druckluft werden bei erhöhter Temperatur und konstantem Druck in eine Verbrennungskammer eingeführt, wobei die Luftmenge so gewählt wird, dass mindestens 90% des Luftsauerstoffes während der Verbrennung verbraucht wird. Zudem wird überhitztes Wasser unter Druck in die Verbrennungskammer eingeführt, das in letzterer unmittelbar verdampft. Die zugeführte Wassermenge wird derart gesteuert, dass die Verdampfungswärme des Wassers die Temperatur des Arbeitsfluidums auf einem gewünschten Level hält.

Das Verfahren des Vormischens von Treibstoff und Luft vor dem Verbrennen ist gegenwärtig für Wasserstoff und wasserstoffreiche Treibstoffe nicht möglich, und zwar hauptsächlich wegen der hohen Reaktionsfähigkeit von Wasserstoff, die signifikant die Flammengeschwindigkeit erhöht und folglich zu einer Flammenausbreitung stromaufwärts in die Kernströmung des Brenners und somit zu einem Flammenrückschlag führen kann. Die hohe Reaktionsfähigkeit von Wasserstoff verringert zudem die Verzögerungszeit der Selbstzündung, so dass die Gefahr einer Zündung der Vormischung aus Treibstoff und Luft vor deren Einleitung in die Verbrennungskammer gegeben ist. Daher erfolgt bei herkömmlichen Brennern für wasserstoffreiche Treibstoffe keine Vormischung des Treibstoffes mit Luft, und es liegt eine Diffusionsflamme vor, in die der Treibstoff unmittelbar injiziert wird. Die Diffusionsflamme befindet sich an der Position stöchiometrischer Mischungszusammensetzung, an der diese bei sehr hoher Flammentemperatur brennt und ein hohes NOₓ- Niveau erzeugt wird. Um die Flammentemperatur zu verringern, wird eine Verdünnung des Treibstoffes mit Stickstoff oder Dampf vorgenommen, wodurch jedoch der Gesamtwirkungsgrad der Verbrennungsanlage verringert wird. Dampf wird für gewöhnlich dem Dampfzyklus eines kombinierten Kreislaufes mit stromerzeugenden Anlagen entnommen und geht somit grundsätzlich dem Gesamtprozess verloren. Die verfahrensmäßige Auslegung herkömmlicher Brenner ist daher auf eine Minimierung der Menge injizierten Dampfes gerichtet.

In diesem Zusammenhang ist auch ein Verfahren zum Betrieb eines Vormischbrenners zu nennen, das aus der EP 1 215 382 A1 bekannt ist. Gemäß dieser Druckschrift wird hierbei in Abhängigkeit von wenigstens einer aus wenigstens einer gemessenen Größe ermittelten Leitgröße eine Wassermenge in den Brenner und/oder in die Reaktionszone des Brenners eingebracht. Bei einer bevorzugten Variante dieses bekannten Verfahrens wird der Brenner trocken, das heißt ohne Wassereinspritzung zur Stickoxidminderung, betrieben. Dabei wird die eingebrachte Wassermenge, wenn möglich, kleiner als 20% der Brennstoffmenge, bevorzugt kleiner als 5% der Brennstoffmenge gehalten. Bei einer zweiten Variante dieses Verfahrens, bei der der Brenner "nass" betrieben wird, das heißt beim Betrieb mit Wassereinspritzung zur Stickoxidminderung, wird analog die eingebrachte Wassermenge immer möglichst kleiner als 20% der Brennstoffmenge gehalten, bevorzugt wird versucht die Brennstoffmenge auf weniger als 5% zu begrenzen.

### Darstellung der Erfindung

Die vorliegende Erfindung hat eine Verbrennungstechnik für Gasturbinen mit Einspritzung von Wasser oder Dampf in die Gasturbinenverbrennungsanlage zum Ziel, wobei eine optimale und stabile Verbrennung des Treibstoffes insbesondere bei sehr hohem Feuchtigkeitsgehalt mit geringen Emissionen gewährleistet werden soll. Hierbei soll insbesondere eine auf der Eindüsung großer Mengen von Wasserdampf basierende Möglichkeit einer effektiven Nutzung von Erdgas sowie wasserstoffreicher Brennstoffe aus biologischen Ressourcen oder der Kohlevergasung für die Gasturbinentechnik geschaffen werden, um Ressourcen zu schonen, Kosten der Energieproduktion zu reduzieren und Umweltschäden extrem zu minimieren.

Der Erfindung liegt daher die Aufgabe zugrunde, ein Verfahren zum Regeln oder Steuern des Betriebsverhaltens einer Gasturbinenverbrennungsanlage der eingangs erwähnten Art zur Verfügung zu stellen, mit dem zur Verwirklichung der genannten Zielstellung eine Kombinationsmöglichkeit verschiedener Methoden der Dampfeinleitung sowie verschiedener Varianten der Treibstoffinjektion in Form einer lokal verteilten Eindüsung gegeben ist zur Ermöglichung einer gezielten Veränderung der Flammenposition und einer Erhöhung der Flammenstabilität des Brenners und zur Reduzierung von Druckpulsationen bei flexibler Anpassung des Betriebsverhaltens an sich verändernde Treibstoffzusammensetzungen sowie bei Verwendung verschiedenartiger Treibstoffe. Diese sollen Naturgas, wasserstoffhaltiger Treibstoff aus der Vergasung von Kohle, Biomasse und reiner Wasserstoff einschließen, wobei geringe Emissionen und kostensparendes Auffangen von Kohlenstoff nach der Verbrennung realisiert werden sollen.

Diese Aufgabe wird erfindungsgemäß durch Anspruch 1 oder Anspruch 2 gelöst.

Vorteilhafte Weiterbildungen des erfindungsgemäßen Verfahrens zum Regeln des Betriebsverhaltens einer Gasturbinenverbrennungsanlage ergeben sich aus den Patentansprüchen 3 bis 13.

Vorzugsweise erfolgt die Verbrennung des Treibstoffes bei einem Masseverhältnis von Wasserdampf und Luft zwischen 20% und 50%.

Als Treibstoffe finden bevorzugt Naturgas (Erdgas), wasserstoffreiche Treibstoffe z.B. aus der Vergasung von Kohle oder Biomasse oder reiner Wasserstoff Verwendung, wobei die Biomasse insbesondere auf biogenen Brennstoffen der "zweiten Generation" basiert. Das sind Bioabfälle wie Stroh, Halme oder Holzspäne, die nicht extra für diesen Zweck angebaut werden, jedoch ist das bei deren Vergasung entstehende Brenngas sehr wasserstoffhaltig und konnte bislang noch nicht schadstoffarm verbrannt werden.

Der Wasserdampf kann gesättigt oder überhitzt in die Gasturbinenverbrennungsanlage eingeleitet werden. Treibstoffe mit geringerer Reaktionsfähigkeit und Flammengeschwindigkeit, wie z.B. Erdgas und Treibstoff mit geringem Wasserstoffgehalt werden geeigneterweise stromaufwärts des Brennerausgangs in die Gasturbinenverbrennungsanlage injiziert. Die Einspeisung eines derartigen Treibstoffs an dieser Position sorgt für seine geeignete Mischung mit Luft oder mit Luft und Dampf und damit für eine stabile Flamme und geringe Emissionen. Hingegen können Treibstoffe mit höherer Reaktionsfähigkeit und Flammengeschwindigkeit, die zu einem Flammenrückschlag oder Selbstzündung neigen, wie z.B. Treibstoffe mit hohem Wasserstoffgehalt oder reiner Wasserstoff dichter am Brennerausgang injiziert werden, um für eine kurze Verweilzeit eines derartigen Treibstoffes innerhalb des Brenners zu sorgen. Treibstoffe mit hohem Wasserstoffgehalt oder reiner Wasserstoff können auch mit Dampf vermischt und dann in den Brenner eingedüst werden, gegebenenfalls auch an der gleichen Position, an der unverdünntes Erdgas injiziert werden kann. Abhängig von der Dampfeindüsung kann es auch möglich sein, jedweden Treibstoff an ein und derselben Position der Gasverbrennungsanlage in diese zu injizieren.

Durch das Induzieren der Wirbelbewegung in die Luftströmung oder gemischte Luft/Dampfströmung bei Eintritt in den Brenner wird bewirkt, dass die in Wirbelbewegung versetzte Luftströmung oder gemischte Luft/Dampfströmung bei Austritt aus dem Brenner aufplatzt. Dieser sogenannte "Vortex Breakdown" erzeugt stromabwärts des Brennerausgangs eine innere Rezirkulationszone (IRZ), in der kontinuierlich heiße Reaktionsgase und unverbrannte Gase vermischt werden. Der "Vortex Breakdown" kann auch eine äußere Rezirkulationszone (ERZ) in der Verbrennungskammer erzeugen, die vor, nachfolgend oder parallel zur inneren Rezirkulationszone (IRZ) entstehen kann. Geeigneterweise kann Treibstoff zur Stabilisierung der Flamme des Brenners in die innere Rezirkulationszone (IRZ) oder in die Nähe der inneren Rezirkulationszone (IRZ) oder in die Scherschicht an deren Rand injiziert werden. Grundsätzlich erfolgt die Eindüsung von Treibstoff am Anfang der Flamme. Auch kann die Eindüsung von Wasserdampf stromaufwärts des Brenners zur Vermeidung eines Erlöschens der Flamme reduziert und die Eindüsung von Wasserdampf in die innere Rezirkulationszone (IRZ) des Brenners oder bevorzugt hinter die Flamme erhöht werden, wobei die NOₓ-Bildung weiter verringert und hohe Feuchtigkeitsgrade der Gasturbinenverbrennungsanlage erreicht werden. Ferner kann der Treibstoff in die innere Rezirkulationszone (IRZ) der Verbrennungskammer oder in die Nähe der inneren Rezirkulationszone (IRZ) zur Beeinflussung der Verweilzeit der reaktiven Gase in der inneren Rezirkulationszone injiziert werden, wobei das akustische Verhalten der Flamme des Brenners zur Reduzierung von Druckpulsationen verändert wird. Das akustische Verhalten der Flamme kann zur Reduzierung der Druckpulsation auch durch Injektion von Dampf in die Flamme verändert werden, der von außen in die Verbrennungskammer eingedüst wird. Zur Erzeugung eines geeigneten Temperaturprofils am Ausgang der Gasturbinenverbrennungsanlage wird Wasserdampf in die Flamme oder hinter die Flamme injiziert, um das Strömungsfeld entsprechend zu beeinflussen. Es ist auch möglich, die stromaufwärts des Brenners injizierte Wasserdampfmenge und die in die innere Rezirkulationszone der Verbrennungszone eingedüste Wasserdampfmenge zu reduzieren und Wasserdampf hinter oder neben die Flamme der Verbrennungskammer zu injizieren, wobei hohe Feuchtigkeitsgrade in der Verbrennungskammer erzeugt werden und die NOₓ - Bildung weiter verringert wird.

Bei Betrieb der Gasturbinenverbrennungsanlage mit kohlenstoffhaltigen Treibstoffen sorgt die reduzierte Flammentemperatur und der chemische Einfluss des Dampfes für die Möglichkeit, eine annähernd stöchiometrische Mischung von Luft und Treibstoff bei niedrigen NOₓ-Emissionen verbrennen zu können. Wenn der Wasserdampf im Auslass der Gasturbinenverbrennungsanlage kondensiert wird, erreicht die Konzentration von CO₂ den höchst möglichen Wert für Luft durchströmte Gasturbinen, und zwar ungefähr 10% pro Volumen für Naturgas, wodurch eine kostengünstige Gewinnung von CO₂ nach der Verbrennung möglich wird.

Durch die Möglichkeit der Kombination verschiedener Methoden der Dampfeinleitung sowie verschiedener Varianten der Treibstoffinjektion des erfindungsgemäßen Verfahrens ist ein Betrieb die Gasturbinenverbrennungsanlage in überraschender Weise bei einem Masseverhältnis von Wasserdampf und Luft von maximal 50%, vorzugsweise zwischen 20 % und 50% in sehr effektiver Weise möglich. Z.B. ergab sich für Erdgas bei einer Temperatur von 340°C am Brennereinlass ein Feuchtigkeitsgrad der Gasturbinenverbrennungsanlage von 30% bei einem stabilen Verbrennungsprozess. Durch die Eindüsung großer Mengen von Wasserdampf ergeben sich die Vorteile eines "nassen" Gasturbinenzyklus, wie erhöhte und schadstoffärmere Energieproduktion und verbesserte Kühlmöglichkeiten der einzelnen Kreisläufe. Die NOₓ-Emissionen werden durch die Erzeugung erhöhter Feuchtigkeitsgrade überdimensional reduziert. Zudem ist davon auszugehen, dass ein Feuchtigkeitsgrad von 20% ausreicht, um zu bewirken, dass die NOₓ-Emissionen im einstelligen ppm-Bereich bleiben. Hinzu kommt der überraschende Vorteil der Möglichkeit einer schadstoffarmen Verbrennung von besonders wasserstoffreichen Treibstoffen wie solchen aus der Vergasung von Kohle und Biomasse, speziell biogene Brennstoffe der "zweiten Generation" und von reinem Wasserstoff. Dass der Wirkungsgrad der Gasturbinenverbrennungsanlage durch ein derart beträchtliche Menge injizierten Dampfes signifikant zu erhöhen ist, war nach dem eingangs angeführten Stand der Technik nicht zu erwarten.

### Kurze Beschreibung der Zeichnung

Die Erfindung wird nun unter Bezug auf die einzige Figur der Zeichnung beschrieben, die in schematisierter Darstellung ein System zur Durchführung des erfindungsgemäßen Verfahrens zum Regeln des Betriebsverhaltens einer Gasturbinenanlage zeigt.

### Weg zur Ausführung der Erfindung

Wie aus der einzigen Figur hervorgeht, weist die Gasturbinenverbrennungsanlage 1 einen Brenner 2 auf, der in einer Verbrennungskammer 3 installiert ist und einen sich innerhalb des Brenners 2 in dessen Längsrichtung erstreckenden axialzentrischen Brennerkörper 4 aufweist. Der Brenner 2 weist einen Wirbelgenerator 5 auf. In die in den Brenner 2 eingangsseitig einströmende Luft oder der gemischten Luft/Dampfströmung 6 wird eine Wirbelbewegung durch den Wirbelgenerator 5 induziert. Es ist auch möglich in dem axialzentrischen Brennerkörper 4 noch einen weiteren Wirbelgenerator vorzusehen. Stromabwärts des Brennerausgangs 7 expandiert die Strömung, was zu einem sogenannten "Vortex Breakdown" führt, durch den eine innere und eine äußere Rezirkulationszone in der Verbrennungskammer 3 erzeugt werden. Die innere Rezirkulationszone kann zur rein aerodynamischen Stabilisierung der Flamme verwendet werden.

Der Brenner 2 weist die Möglichkeit einer Einspeisung von Treibstoff, Dampf und/oder Mischungen von Treibstoff und Dampf und/oder Mischungen von Treibstoff und Luft in den Brennerinnenraum 8 an verschiedenen Positionen auf, wie aus der einzigen Figur zu ersehen ist, und zwar durch den Mantel des axialzentrischen Brennerkörpers 4 bei Position 9 stromaufwärts des Brennerausgangs 7, durch das Außengehäuse 10 der Brenners 2 bei Position 11 und durch die Mündung 12 des axialzentrischen Brennerkörpers 4 bei Position 13 direkt in die Flamme in der Verbrennungskammer 3. Abhängig vom Ort der Injektion, wird die Verbrennungskammer 3 in der Vormischweise oder der Diffusionsweise oder in einer Kombination beider gefahren, z.B., um die Vormischflamme durch Injektion eines Pilotbrennstoffes bei Position 13 in die Flamme oder in die Nähe der Flamme zu stabilisieren. Der Treibstoff kann auch in den Wirbelgenerator oder am Ende des Wirbelgenerators eingedüst werden. Auch kann das Treibstoff/Luft Gemisch an der Position 11 oder unverdünnter Treibstoff an der Position 9 eingedüst werden. Die Erfindung ist nicht auf die in der einzigen Figur dargestellten Ausführungsform des Brenners beschränkt.

Z.B. dienen die Positionen 9 und 11 zur Eindüsung von Treibstoff und/oder zur Eindüsung einer Mischung von Dampf und Treibstoff jeweils in den den axialzentrischen Brennerkörper 4 umgebenden Brennerinnenraum 8 und Position 13 zur Eindüsung allein von Treibstoff oder einer Mischung von Treibstoff und Luft direkt in die Flamme in der Verbrennungskammer 3. Die Position 9 und die Position 11 können relativ zur Ebene des Brennerausgangs 7 in Achsrichtung des axialzentrischen Brennerkörpers 4 versetzt sein, um die Form der Flamme zu beeinflussen. Die Eindüsung von Brennstoff muss nicht an der Position 13 stromabwärts erfolgen, sondern sie kann auch in seitlicher Richtung z. B. durch im axialzentrischen Brennerkörper 4 entsprechend positionierte Löcher oder Schlitze eingedüst werden.

So können Treibstoffe mit niedriger Reaktionsfähigkeit und geringer Flammengeschwindigkeit, z.B. Erdgas oder wasserstoffarme Treibstoffe, geeignet bei Position 9 und/oder Position 11 stromaufwärts des Brennerausgangs 7 mit Wasserdampf gemischt in den den axialzentrischen Brennerkörper 4 umgebenden Brennerinnenraum 8 injiziert werden. Eine derartige Einspeisung des Treibstoffes verhältnismäßig weit stromaufwärts des Brennerausgangs 7 an der Position 9 und/oder 11 gewährleistet eine geeignete Mischung mit Luft oder mit Luft und Wasserdampf und daher eine stabile Flamme und geringe Emissionen. Für Treibstoffe mit höherer Reaktionsfähigkeit und größerer Flammengeschwindigkeit, die zu einem Flammenrückschlag oder Selbstzündung neigen, z.B. wasserstoffreiche Treibstoffe oder reiner Wasserstoff können die Positionen 9 und 11 näher an den Brennerausgang 7 versetzt werden, um eine geringe Verweilzeit des Treibstoffs in dem den axialzentrischen Brennerkörper 4 umgebenden Brennerinnenraum 8 zu gewährleisten. Wasserstoff oder wasserstoffhaltige Brennstoffe können auch mit Dampf vermischt an der gleichen axialen Position bzw. auch durch die gleiche Düse wie das unverdünnte Erdgas eingedüst werden.

An der Position 13 kann allein Treibstoff oder eine Mischung von Treibstoff und Luft durch die Mündung 12 des axialzentrischen Brennerkörpers 4 direkt in die Flamme der Verbrennungskammer 3 injiziert werden. So kann z.B. nur Treibstoff in die Verbrennungskammer 3 durch die Mündung 12 des axialzentrischen Brennerkörpers 4 injiziert werden, um eine lokal reiche, bei hohen Temperaturen brennende Mischung zur Stabilisierung der Vormischflamme zu erzeugen. Die Treibstoffinjektion an der Position 13 kann auch dazu verwendet werden, um die Position und die Form der Flamme zu verändern zwecks Veränderung des akustischen Verhaltens der Flamme, um Druckpulsationen zu verringern.

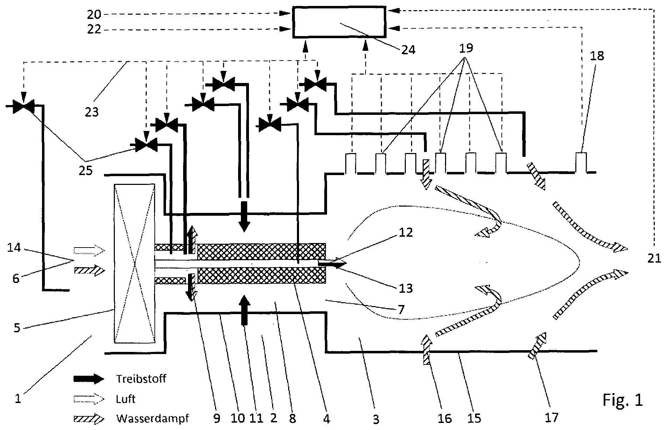

Das in Figur 1 schematische dargestellt System zum Regeln oder Steuern des Betriebsverhaltens der Gasturbinenverbrennungsanlage 1 weist weiterhin die Möglichkeit der Eindüsung von Dampf allein oder zusammen mit Luft oder in Mischung mit Treibstoff an verschiedenen Postionen auf. So kann Dampf stromaufwärts des Brenners 2 an der Position 14 in die komprimierte Luft injiziert werden, so dass für eine gute Mischung des Dampf/Luft-Gemisches mit Brennstoff im Brenner 2 gesorgt und somit auf die Emissionsbildung innerhalb der gesamten Verbrennungskammer 3 eingewirkt werden kann.

Der dem Brenner 2 eingangsseitig vorgeschaltete Wirbelgenerator 5 kann mit zueinander verdrehbaren Elementen ausgerüstet sein, durch die die Verteilung der Volumenströmungen durch die radialen und tangentialen Strömungsdurchlässe des Wirbelgenerators 5 zu verändern ist. Hierdurch kann die Intensität der Wirbelströmung (Wirbelzahl) variiert werden.

Luft und Dampf werden stromaufwärts des Brenners 2 bei Position 14 (Fig. 1) gemischt und strömen in den den Wirbelgenerator 5 aufweisenden Brenner 2. In das aus dem Wirbelgenerator 5 strömende Luft/Dampf-Gemisch kann Treibstoff durch eine Vielzahl Düsenöffnungen injiziert werden, die in einer Bodenplatte des Brenners 2 über deren Umfang im gleichen Abstand zu einander verteilt ausgebildet sein können. Der Treibstoff kann auch innerhalb des Wirbelgenerators 5 oder am Ende des Wirbelgenerators 5 injiziert werden. Z.B. kann der Wirbelgenerator 5 aus Schaufeln bestehen, durch die der Treibstoff in die Luft eingedüst werden kann. Die Wirbelströmung strömt durch den den axialzentrischen Brennerkörper 4 umgebenden Brennerinnenraum 8. Durch die Mündung 7 des axialzentrischen Brennerkörpers 4 kann zusätzlich ein Pilotbrennstoff zur Erzeugung einer lokal fetten Mischung injiziert werden, um die Flamme zu stabilisieren. Die durch den Brennerinnenraum 8, der den axialzentrischen Brennerkörper 4 umgibt, strömende Gasmischung kann, abhängig von den Betriebsbedingungen, mit einer axialen Geschwindigkeit im Bereich von 50 m/s bis 60 m/s am Brennerauslass 7 in die Verbrennungskammer 3 der beschriebenen Ausführungsform austreten. Es sind aber auch axiale Geschwindigkeiten der Gasmischung von z.B. 10 m/s oder axiale Geschwindigkeiten der Gasmischung von z.B. über 60 m/s mit anderen Ausführungsformen des Brenners am Brennerauslass möglich. Hierbei expandiert die Strömung stromabwärts infolge des Umfangsmomentes in der Verbrennungskammer 3, was durch den sogenannten Vortex-Breakdown zu der die Flamme stabilisierenden inneren Rezirkulationszone und der äußeren Rezirkulationszone in der Verbrennungskammer 3 führt.

Wie bereits oben erwähnt, kann Dampf an der Position 9 und/oder an der Position 11 mit Treibstoff vermischt aus dem axialzentrischen Brennerkörper 4 bzw. von außen durch das Gehäuse 15 des Brenners 2 in den axialzentrischen Brennerkörper 4 umgebenden Brennerinnraum 8 stromaufwärts des Brennerausgangs 7 injiziert werden, um z.B. die Reaktionsfähigkeit und die Flammengeschwindigkeit des Treibstoffes zur Vermeidung eines sogenannten "flashback" zu verringern. Die Erzeugung der Mischung von Treibstoff und Dampf kann stromaufwärts der Injektionsdüse erfolgen, durch die anschließend diese Mischung in den Brennerinnenraum 8 injiziert wird. Die Mischung von Treibstoff und Dampf kann auch innerhalb des Brenners 2 erfolgen, indem der Dampf und der Treibstoff separat, jedoch in dichtem räumlichen Abstand voneinander in den Brennerinnenraum 8 injiziert werden, z.B. mittels kombinierter Dampf/Treibstoff-Düsen oder mittels getrennter Düsen.

Weiterhin kann an der Position 16 möglichst überhitzter Dampf in dichtem Abstand zur Flamme oder unmittelbar in die Flamme der Verbrennungskammer 3 injiziert werden. Hierdurch ist ein stabiler Verbrennungsprozess bei hohen Temperaturen am Fuß der Flamme zu erreichen, worauf die Dampfinjektion die Temperatur verringert und damit auch die Bildung von NOₓ. Z.B. kann die an der Position 14 injizierte Dampfmenge reduziert werden, um ein Erlöschen der Flamme zu verhindern, wobei durch eine weitere Eindüsung von Dampf an der Position 16 die NOₓ- Bildung noch mehr reduziert und der Feuchtigkeitsgrad erheblich erhöht werden können. Die Dampfinjektion an der Position 16 kann auch dazu dienen, auf das Strömungsfeld dahingehend einzuwirken, dass für eine Verweilzeit des Gases innerhalb der Bereiche hoher Temperatur derart gesorgt wird, dass die NOₓ-Bildung verringert oder das akustische Verhalten der Flamme zur Verminderung von Druckpulsationen verändert wird.

An der Position 17 ist eine weitere Möglichkeit der Injektion von Dampf, möglichst von überhitztem Dampf hinter der Flamme in die Verbrennungskammer 3 gegeben. Der Dampf kann in diesen Hochtemperaturbereich der Verbrennungskammer 3 zur Reduzierung der NOₓ-Bildung injiziert werden, während für eine Verweilzeit des Gases innerhalb des heißen Bereiches gesorgt wird, die lang genug ist für ein vollständiges Verbrennen von CO und UHC (unverbrannten Kohlenwasserstoffen). So kann z.B. die Dampfinjektion an den Positionen 14 oder 16 gedrosselt werden, um ein Erlöschen der Flamme zu verhindern, und Dampf verstärkt an der Position 17 injiziert werden, um die NOₓ-Bildung weiter zu verringern und die hohen Feuchtigkeitsgrade zu erreichen. In ähnlicher Weise kann die Dampfinjektion an der Position 14 oder 16 variiert werden, um geringe Druckpulsationen zu erzielen, sowie verstärkt Dampf an der Position 17 injiziert werden, um die NOₓ-Emissionen zu verringern und die hohen Feuchtigkeitsgrade zu erreichen. Der Dampf kann auch an der Position 17 injiziert werden, um ein geeignetes Temperaturprofil am Turbinenauslass zu erzeugen.

Wie die einzige Figur weiterhin zeigt, ist die Verbrennungskammer 3 mit mehreren, an verschiedenen Stellen positionierten Sensoren zum Erfassung von Druck (Position 18), OH-Strahlung der Flamme, CH-Strahlung der Flamme und Temperaturen des Werkstoffs der Wandung der Verbrennungskammer 3 (Position 19) ausgerüstet, wodurch Informationssignale über Druckpulsationen (Frequenzen und Amplituden), die Flammenposition und die Flammenstabilität zu erhalten sind. Es ist jedoch auch möglich, die Verbrennungskamme 3 nur mit einem Sensor zu bestücken und nur einen Messwert zur Regelung des Prozesses zu ermitteln. Das Steuern des Prozesses erfolgt hingegen ohne sensorische Ermittlung eines Messwertes. Es genügt z.B. eine Information über die Brennstoffzusammensetzung/Massenströme.

Die auf den Sensoren an den Positionen 18 und 19 basierenden Informationssignale wie auch eine jeweilige Information über Betriebsbedingungen (Position 20), Emissionen z.B. von NOₓ, CO, unverbranntem Treibstoff (Position 21), über die laufende Treibstoffzusammensetzung (Position 22) sowie über die laufenden Masseströmungsdurchsätze von Treibstoff, Luft und Dampf (Position 23) und deren Temperaturen werden einer Kontrolleinheit 24 eingegeben, von der über jeweilige Regelventilvorrichtungen 25 mit jeweils mindestens einem Eindüsungsmittel die Dampf- und die Treibstoffmasseströme an den verschiedenen Positionen 9; 11; 13; 14; 16; 17 der Gasturbinenverbrennungsanlage 1 auf der Basis der Informationssignale und jeweiligen Informationen geregelt werden. Mit dem erfindungsgemäßen Verfahren kann die Gasturbinenverbrennungsanlage 1 bei signifikant hohen Feuchtigkeitsgraden (sehr hohem Masseverhältnis von Wasserdampf und Luft) bei sehr geringen Emissionen betrieben werden, ohne dass die Flamme instabil wird oder erlischt. Zudem können wasserstoffreiche Treibstoffe und Wasserstoff ohne die Gefahr eines Flammenrückschlags oder einer Selbstzündung und bei niedrigen Emissionen verbrannt werden. Weiterhin können kohlenstoffhaltige Treibstoffe wie Erdgas bei Äquivalenzverhältnissen bis zu stöchiometrischen Bedingungen bei geringen NOₓ, CO- und UHC-Emissionen verbrannt werden. Durch Regelung der Dampf- und der Treibstoffinjektion kann die Kontrolleinheit 24 sich auch an Treibstoffe mit sich zeitlich verändernder Zusammensetzung anpassen.

### Liste der Bezugszeichen:

1 Gasturbinenverbrennungsanlage
2 Brenner
3 Verbrennungskammer
4 axialzentrischer Brennerkörper
5 Wirbelgenerator
6 Luft oder gemischte Luft/Dampfströmung
7 Brennerausgang
8 Brennerinnenraum
9 Position zur Eindüsung von Treibstoff und/oder Dampf durch den Mantel des axialzentrischen Brennerkörpers in den Brennerinnenraum
10 Außengehäuse des Brenners
11 Position zur Eindüsung von Treibstoff und/oder Dampf durch das Außengehäuse des Brenners in den Brennerinnenraum
12 Mündung des axialzentrischen Brennerkörpers
13 Position zur Eindüsung von Treibstoff oder Treibstoff/Luft-Gemisch direkt in die Flamme
14 Position zur Eindüsung von Luft und Dampf oder Luft/Dampf-Gemisch stromaufwärts des Brenners
15 Gehäuse der Verbrennungskammer
16 Position zur Eindüsung von Dampf in dichten Abstand zur Flamme oder direkt in die Flamme in die Verbrennungskammer
17 Position zur Eindüsung von Dampf hinter der Flamme in die Verbrennungskammer
18 Sensoreinrichtung zur Erfassung von Druck
19 Sensoreinrichtung zur Erfassung der OH-Strahlung der Flamme, der CH-Strahlung der Flamme und der Temperatur des Werkstoffes des Wandung der Verbrennungskammer
20 Sensoreinrichtung zur Erfassung der laufenden Betriebsbedingungen
21 Sensoreinrichtung zur Erfassung von Emissionen am Ausgang der Verbrennungskammer
22 Sensoreinrichtung zur Erfassung der laufenden Treibstoffzusammensetzung
23 Sensoreinrichtung zur Erfassung der laufenden Masseströmungsdurchsätze von Treibstoff, Luft und Dampf
24 Kontrolleinheit
25 Regelventilvorrichtung/Steuerventilvorrichtung

## Patentansprüche

1. Verfahren zum Regeln des Betriebsverhaltens einer Gasturbinenverbrennungsanlage mit mindestens einer Verbrennungskammer und mindestens einem in dieser installierten Brenner, bei dem in die Gasturbinenverbrennungsanlage eine Wasserdampfeinleitung in Kombination mit einer Treibstoffeinleitung durch Injektion einer Mischung von Wasserdampf und Treibstoff oder einer Mischung von Wasserdampf und Treibstoff mit Luft, die jeweils stromaufwärts des Ortes der Injektion erzeugt wird, stromaufwärts des Brenneraustritts in den Brenner sowie eine Einleitung von Luft stromaufwärts des Brenneraustritts in den Brenner über eine Kontrolleinheit geregelt erfolgt,
**dadurch gekennzeichnet, dass**
eine Verbrennung des Treibstoffes bei einem Masseverhältnis von Wasserdampf und Luft von maximal 50% erfolgt, indem zudem die Einleitung des Wasserdampfes in die Gasturbinenverbrennungsanlage
zusammen mit Luft stromaufwärts des Brenners und/oder
durch Injektion des Wasserdampfes unmittelbar in die Flamme oder in geringem Abstand zu der Flamme der Verbrennungskammer in diese und/oder
durch Injektion des Wasserdampfes hinter der Flamme der Verbrennungskammer in diese erfolgt,
in Kombination mit der Einleitung des Treibstoffen in die Gasturbinenverbrennungsanlage zudem durch Injektion des Treibstoffes stromaufwärts des Brenneraustritts in den Brenner und/oder
in Form einer Mischung von Treibstoff und Wasserdampf stromaufwärts des Brenneraustritts, die nach jeweils separater, jedoch räumlich unmittelbar benachbarter Injektion von Treibstoff und Wasserdampf in den Brenner innerhalb des Brenners erzeugt wird, und/oder
durch Injektion des Treibstoffes oder einer Mischung des Treibstoffes mit Luft unmittelbar in die Flamme des Brenners, wobei
in die Luftströmung oder gemischte Luft/Dampfströmung bei Eintritt in den Brenner eine Wirbelbewegung induziert und durch Variieren der Intensität der Wirbelbewegung das Verhältnis der Weite bzw. der Rezirkulationsströmung der stromabwärts des Brennerausgangs durch den sogenannten Vortex Breakdown erzeugten inneren und der äußeren Rezirkulationszone (IRZ bzw. ERZ) zueinander zur Stabilisierung der Flamme in der Verbrennungskammer und zur Reduzierung der NOₓ Bildung verändert wird, und
wobei sensorisch Kenndaten des Betriebszustandes der Verbrennungskammer fortlaufend erfasst und zusammen mit Informationssignalen über die laufende Treibstoffzusammensetzung, Betriebsbedingungen, Emissionen und über den laufenden Massedurchsatz von Treibstoff, Luft und Wasserdampf der Kontrolleinheit eingegeben werden, die die Wasserdampf- und Treibstoffmasseströme entsprechend regelt.

2. Verfahren zum Steuern des Betriebsverhaltens einer Gasturbinenverbrennungsanlage mit mindestens einer Verbrennungskammer und mindestens einem in dieser installierten Brenner, bei dem in die Gasturbinenverbrennungsanlage eine Wasserdampfeinleitung in Kombination mit einer Treibstoffeinleitung durch Injektion einer Mischung von Wasserdampf und Treibstoff oder einer Mischung von Wasserdampf und Treibstoff mit Luft, die jeweils stromaufwärts des Ortes der Injektion erzeugt wird, stromaufwärts des Brenneraustritts in den Brenner sowie eine Einleitung von Luft stromaufwärts des Brenneraustritts in den Brenner über eine Kontrolleinheit gesteuert erfolgt,
**dadurch gekennzeichnet, dass**
eine Verbrennung des Treibstoffes bei einem Masseverhältnis von Wasserdampf und Luft von maximal 50% erfolgt, indem zudem die Einleitung des Wasserdampfes in die Gasturbinenverbrennungsanlage
zusammen nur mit Luft stromaufwärts des Brenners und/oder
durch Injektion des Wasserdampfes unmittelbar in die Flamme oder in geringem Abstand zu der Flamme der Verbrennungskammer in diese und/oder
durch Injektion des Wasserdampfes hinter der Flamme der Verbrennungskammer in diese erfolgt,
in Kombination mit der Einleitung des Treibstoffen in die Gasturbinenverbrennungsanlage zudem durch Injektion des Treibstoffes stromaufwärts des Brenneraustritts in den Brenner und/oder
in Form einer Mischung von Treibstoff und Wasserdampf stromaufwärts des Brenneraustritts, die nach jeweils separater, jedoch räumlich unmittelbar benachbarter Injektion von Treibstoff und Wasserdampf in den Brenner innerhalb des Brenners erzeugt wird, und/oder
durch Injektion des Treibstoffes oder einer Mischung des Treibstoffes mit Luft unmittelbar in die Flamme des Brenners, wobei
in die Luftströmung oder gemischte Luft/Dampfströmung bei Eintritt in den Brenner eine Wirbelbewegung induziert und durch Variieren der Intensität der Wirbelbewegung das Verhältnis der Weite bzw. der Rezirkulationsströmung der stromabwärts des Brennerausgangs durch den sogenannten Vortex Breakdown erzeugten inneren und der äußeren Rezirkulationszone (IRZ bzw. ERZ) zueinander zur Stabilisierung der Flamme in der Verbrennungskammer und zur Reduzierung der NOₓ Bildung verändert wird, und
wobei sensorisch Kenndaten des Betriebszustandes der Verbrennungskammer fortlaufend erfasst und zusammen mit Informationssignalen über die laufende Treibstoffzusammensetzung, Betriebsbedingungen, Emissionen und über den laufenden Massedurchsatz von Treibstoff, Luft und Wasserdampf der Kontrolleinheit eingegeben werden, die die Wasserdampf- und Treibstoffmasseströme entsprechend steuert.

3. Verfahren nach Anspruch 1 oder 2, **dadurch gekennzeichnet, dass** die Verbrennung des Treibstoffes bei einem Masseverhältnis von Wasserdampf und Luft zwischen 20% und 50% erfolgt.

4. Verfahren nach einem der vorhergehenden Ansprüche, **dadurch gekennzeichnet, dass** als Treibstoff Naturgas (Erdgas), wasserstoffhaltiger Treibstoff aus der Vergasung von Kohle oder Bioabfall oder reiner Wasserstoff verwendet wird.

5. Verfahren nach einem der vorgehenden Ansprüche, **dadurch gekennzeichnet, dass** gesättigter oder überhitzter Wasserdampf verwendet wird.

6. Verfahren nach einem der Ansprüche 1 bis 5, **dadurch gekennzeichnet, dass** die sensorisch ermittelten Kenndaten der Verbrennungskammer den Druck in der Verbrennungskammer und/oder die OH-Strahlung der Flamme und/oder die CH-Strahlung der Flamme und/oder die Materialtemperatur der Verbrennungskammer umfassen, aus denen sich eine Information über die Druckpulsation und/oder die Flammenposition und/oder die Flammenstabilität ergibt.

7. Verfahren nach Anspruch 1, **dadurch gekennzeichnet, dass** in die innere Rezirkulationszone (IRZ) Treibstoff zur Stabiliserung der Flamme des Brenners injiziert wird.

8. Verfahren nach Anspruch 1 und 7, **dadurch gekennzeichnet, dass** die Injektion von Wasserdampf stromaufwärts des Brenners zur Vermeidung eines Erlöschens der Flamme reduziert und die Injektion von Wasserdampf in die innere Rezirkulationszone des Brenners erhöht werden, wobei die NOₓ-Bildung weiter verringert und hohe Feuchtigkeitsgrade der Gasturbinenverbrennungsanlage erreicht werden.

9. Verfahren nach Anspruch 1, **dadurch gekennzeichnet, dass** in die innere Rezirkulationszone der Verbrennungskammer Wasserdampf zur Beeinflussung der Verweilzeit der reaktiven Gase in der inneren Rezirkulationszone injiziert wird, wobei das akustische Verhalten der Flamme des Brenners zur Reduzierung von Druckpulsationen verändert wird.

10. Verfahren nach Anspruch 1, **dadurch gekennzeichnet, dass** Wasserdampf hinter der Flamme der Verbrennungskammer zur Erzeugung eines geeigneten Temperaturprofils am Ausgang der Gasturbinenverbrennungsanlage injiziert wird.

11. Verfahren nach Anspruch 1 und 7, **dadurch gekennzeichnet, dass** die stromaufwärts des Brenners injizierte Wasserdampfmenge und die in die innere Rezirkulationszone der Verbrennungszone injizierte Wasserdampfmenge reduziert werden und hinter der Flamme der Verbrennungskammer Wasserdampf injiziert wird, wobei die NOₓ - Bildung weiter verringert und hohe Feuchtigkeitsgrade in der Verbrennungskammer erzielt werden.

12. Verfahren nach einem der vorhergehenden Ansprüche, **dadurch gekennzeichnet, dass** die Verbrennungskammer in einer Kombination aus Vormischweise und Diffusionsweise betrieben wird.

13. Verfahren nach einem der vorhergehenden Ansprüche, **dadurch gekennzeichnet, dass** Erdgas oder Treibstoffe mit geringem Wasserstoffgehalt stromaufwärts des Brennerausgangs in die Gasturbinenverbrennungsanlage injiziert werden.

## Claims

1. Method for controlling in a closed-loop system the operating behaviour of a gas turbine combustion system with at least one combustion chamber and at least one burner installed therein, in which an introduction of water vapour in combination with a an introduction of fuel into the gas turbine combustion system takes place by injection of a mixture of water vapour and fuel or a mixture of water vapour and fuel with air, each of which is generated upstream of the injection site, into the burner upstream of the burner outlet in controlled manner via a control unit, and an introduction of air into the burner takes place upstream of the burner outlet in controlled manner via a control unit,
**characterized in that**
a combustion of the fuel takes place with a mass proportion of water vapour to air not exceeding 50% by additionally introducing the water vapour into the gas turbine combustion system
together with air upstream of the burner, and/or
by injection of the water vapour directly into the flame or into the combustion chamber close to the flame thereof, and/or
by injection of the water vapour into the combustion chamber behind the flame thereof,
in combination with the introduction of the fuel into the gas turbine combustion system also by injection of the fuel into the burner upstream of the burner outlet, and/or
in the form of a mixture of fuel and water vapour upstream of the burner outlet, which mixture is generated in the burner after injecting both fuel and water vapour into the burner separately but spatially immediately adjacent to each other, and/or
by injection of the fuel or a mixture of the fuel with air directly into the flame of the burner, wherein
a vortex motion is induced in the air stream or the mixed air/vapour stream upon entry into the burner and the ratio relative to each other of the width and/or the recirculation stream of the inner and outer recirculation zones (IRZ or ERZ) generated downstream of the burner outlet by the "vortex breakdown" is changed by varying the intensity of the vortex motion for stabilising the flame in the combustion chamber and for reducing the formation of NOₓ, and
wherein characteristic data of the operating state of the combustion chamber are captured continuously by sensor means and are input together with information signals relating to the current fuel composition, operating conditions, emissions, and to the current mass throughput of fuel, air and water vapour into the control unit, which regulates the water vapour and fuel mass flows correspondingly.

2. Method for controlling in an open-loop system the operating behaviour of a gas turbine combustion system with at least one combustion chamber and at least one burner installed therein, in which an introduction of water vapour in combination with a an introduction of fuel into the gas turbine combustion system takes place by injection of a mixture of water vapour and fuel or a mixture of water vapour and fuel with air, each of which is generated upstream of the injection site, into the burner upstream of the burner outlet in controlled manner via a control unit, and an introduction of air into the burner takes place upstream of the burner outlet in controlled manner via a control unit,
**characterized in that**
a combustion of the fuel takes place with a mass proportion of water vapour to air not exceeding 50% by additionally introducing the water vapour into the gas turbine combustion system
only together with air upstream of the burner, and/or by injection of the water vapour directly into the flame or into the combustion chamber close to the flame thereof, and/or
by injection of the water vapour into the combustion chamber behind the flame thereof,
in combination with the introduction of the fuel into the gas turbine combustion system also by injection of the fuel into the burner upstream of the burner outlet, and/or
in the form of a mixture of fuel and water vapour upstream of the burner outlet, which mixture is generated in the burner after injecting both fuel and water vapour into the burner separately but spatially immediately adjacent to each other, and/or
by injection of the fuel or a mixture of the fuel with air directly into the flame of the burner, wherein
a vortex motion is induced in the air stream or the mixed air/vapour stream upon entry into the burner and
the ratio relative to each other of the width and/or the recirculation stream of the inner and outer recirculation zones (IRZ or ERZ) generated downstream of the burner outlet by the "vortex breakdown" is changed by varying the intensity of the vortex motion for stabilising the flame in the combustion chamber and for reducing the formation of NOₓ, and
wherein characteristic data of the operating state of the combustion chamber are captured continuously by sensor means and are input together with information signals relating to the current fuel composition, operating conditions, emissions, and to the current mass throughput of fuel, air and water vapour into the control unit, which controls the water vapour and fuel mass flows correspondingly.

3. Method according to claim 1 or 2, **characterized in that** the combustion of the fuel takes place at a mass ratio of water vapour to air between 20 % and 50 %.

4. Method according to any one of the preceding claims, **characterized in that** natural gas, hydrogen-containing fuel from the gasification of coal or biowaste or pure hydrogen is used as fuel.

5. Method according to any one of the preceding claims, **characterized in that** saturated or superheated water vapour is used.

6. Method according to any one of claims 1 to 5, **characterized in that** the characteristic data of the combustion chamber determined by sensor means include the pressure in the combustion chamber and/or the OH radiation of the flame and/or the CH radiation of the flame and/or the material temperature of the combustion chamber, from which information about the pressure pulsation and/or the flame position and/or the flame stability is obtained.

7. Method according to claim 1, **characterized in that** fuel is injected into the inner recirculation zone (IRZ) to stabilise the flame of the burner.

8. Method according to claims 1 and 7, **characterized in that** the injection of water vapour upstream of the burner is reduced to avoid a flame extinction and the injection of water vapour into the internal recirculation zone of the burner is increased, wherein the formation of NOₓ is further reduced and high levels of humidity in the gas turbine combustion plant are achieved.

9. Method according to claim 1, **characterized in that** water vapour is injected into the inner recirculation zone of the combustion chamber in order to influence the residence time of the reactive gases in the inner recirculation zone, wherein the acoustic behaviour of the flame of the burner is changed to reduce pressure pulsations.

10. Method according to claim 1, **characterized in that** water vapour is injected behind the flame of the combustion chamber to produce a suitable temperature profile at the outlet of the gas turbine combustion plant.

11. Method according to claims 1 and 7, **characterized in that** the quantity of water vapour injected upstream of the burner and the quantity of water vapour injected into the inner recirculation zone of the combustion zone are reduced and water vapour is injected behind the flame of the combustion chamber, wherein the formation of NOₓ is reduced further high levels of moisture in the combustion chamber are achieved.

12. Method according to any one of the preceding claims, **characterized in that** the combustion chamber is operated in a combination of premixing and diffusion modes.

13. Method according to any one of the preceding claims, **characterized in that** natural gas or fuels with low hydrogen content are injected into the gas turbine combustion plant upstream of the burner outlet.

## Revendications

1. Procédé, destiné à réguler le comportement opérationnel d'un incinérateur à turbine à gaz, pourvu d'au moins une chambre de combustion et d'au moins un brûleur installé dans celle-ci, lors duquel a lieu dans l'incinérateur à turbine à gaz, de manière régulée par une unité de contrôle une introduction de vapeur d'eau, en association avec une introduction de combustible par injection d'un mélange de vapeur d'eau et de combustible ou d'un mélange de vapeur d'eau et de combustible avec de l'air, qui est respectivement créé en amont du lieu de l'injection, en amont de la sortie du brûleur dans le brûleur, ainsi qu'une introduction d'air en amont de la sortie du brûleur dans le brûleur,
**caractérisé**
**en ce qu'**une combustion du combustible a lieu à un rapport en masse de la vapeur d'eau et de l'air d'un maximum de 50 %, **en ce que** par ailleurs, l'introduction de la vapeur d'eau dans l'incinérateur à turbine à gaz
a lieu conjointement avec de l'air, en amont du brûleur et/ou
par l'injection de la vapeur d'eau, directement dans la flamme ou à faible distance de la flamme de la chambre de combustion dans celle-ci et/ou
a lieu par l'injection de la vapeur d'eau derrière la flamme de la chambre de combustion dans celle-ci,
en association avec l'introduction du combustible dans l'incinérateur à turbine à gaz, par ailleurs par l'injection du combustible en amont de la sortie du brûleur dans le brûleur et/ou
sous la forme d'un mélange de combustible et de vapeur d'eau en amont de la sortie du brûleur, qui est créé par l'injection respectivement séparée, toutefois directement voisine dans l'espace de combustible et de vapeur d'eau dans le brûleur, à l'intérieur du brûleur, et/ou
par l'injection du combustible ou d'un mélange du combustible avec de l'air, directement dans la flamme du brûleur,
dans le courant d'air ou le courant mixte d'air/de vapeur, lors de l'entrée dans le brûleur étant induit un mouvement tourbillonnaire et par variation de l'intensité du mouvement tourbillonnaire, le rapport mutuel de la largeur ou du flux de recirculation de la zone de recirculation intérieure ou extérieure (IRZ ou ERZ) en aval de la sortie du brûleur créée par le dénommé Vortex Breakdown étant modifié pour stabiliser la flamme dans la chambre de combustion et pour réduire la formation de NOₓ, et
par capteurs, des indicateurs de l'état opérationnel de la chambre de combustion étant détectés en continu et étant saisis conjointement avec des signaux d'information sur la composition courante du combustible, les conditions de fonctionnement, les émissions et sur le débit massique courant de combustible, d'air et de vapeur d'eau dans l'unité de contrôle, qui régule en conséquence les débits massiques de vapeur d'eau et de combustible.

2. Procédé, destiné à commander le comportement opérationnel d'un incinérateur à turbine à gaz, pourvu d'au moins une chambre de combustion et d'au moins un brûleur installé dans celle-ci, lors duquel a lieu dans l'incinérateur à turbine à gaz, de manière régulée par une unité de contrôle une introduction de vapeur d'eau, en association avec une introduction de combustible par l'injection d'un mélange de vapeur d'eau et de combustible ou d'un mélange de vapeur d'eau et de combustible avec de l'air, qui est respectivement créé en amont du lieu de l'injection, en amont de la sortie du brûleur dans le brûleur, ainsi qu'une introduction d'air en amont de la sortie du brûleur dans le brûleur
**caractérisé**
**en ce qu'**une combustion du combustible a lieu à un rapport en masse de la vapeur d'eau et de l'air d'un maximum de 50 %, **en ce que** par ailleurs, l'introduction de la vapeur d'eau dans l'incinérateur à turbine à gaz
a lieu conjointement uniquement avec de l'air, en amont du brûleur et/ou
par l'injection de la vapeur d'eau, directement dans la flamme ou à faible distance de la flamme de la chambre de combustion dans celle-ci et/ou
a lieu par l'injection de la vapeur d'eau derrière la flamme de la chambre de combustion dans celle-ci,
en association avec l'introduction du combustible dans l'incinérateur à turbine à gaz, par ailleurs par l'injection du combustible en amont de la sortie du brûleur dans le brûleur et/ou
sous la forme d'un mélange de combustible et de vapeur d'eau en amont de la sortie du brûleur, qui est créé par l'injection respectivement séparée, toutefois directement voisine dans l'espace de combustible et de vapeur d'eau dans le brûleur, à l'intérieur du brûleur, et/ou
par l'injection du combustible ou d'un mélange du combustible avec de l'air, directement dans la flamme du brûleur,
dans le courant d'air ou le courant mixte d'air/de vapeur, lors de l'entrée dans le brûleur étant induit un mouvement tourbillonnaire et par variation de l'intensité du mouvement tourbillonnaire, le rapport mutuel de la largeur ou du flux de recirculation de la zone de recirculation intérieure ou extérieure (IRZ ou ERZ) en aval de la sortie du brûleur créée par le dénommé Vortex Breakdown étant modifié pour stabiliser la flamme dans la chambre de combustion et pour réduire la formation de NOₓ, et
par capteurs, des indicateurs de l'état opérationnel de la chambre de combustion étant détectés en continu et étant saisis conjointement avec des signaux d'information sur la composition courante du combustible, les conditions de fonctionnement, les émissions et sur le débit massique courant de combustible, d'air et de vapeur d'eau dans l'unité de contrôle, qui commande en conséquence les débits massiques de vapeur d'eau et de combustible.

3. Procédé selon la revendication 1 ou 2, **caractérisé en ce que** la combustion du combustible a lieu à un rapport massique de vapeur d'eau et d'air compris entre 20 % et 50 %.

4. Procédé selon l'une quelconque des revendications précédentes, **caractérisé en ce qu'**en tant que combustible on utilise du gaz naturel, un combustible hydrogéné issu de la gazéification de charbon ou des déchets organiques ou de l'hydrogène pur.

5. Procédé selon l'une quelconque des revendications précédentes, **caractérisé en ce qu'**on utilise de la vapeur d'eau saturée ou surchauffée.

6. Procédé selon l'une quelconque des revendications 1 à 5, **caractérisé en ce que** les indicateurs déterminés par capteurs de la chambre de combustion comprennent la pression dans la chambre de combustion et/ou le rayonnement OH de la flamme et/ou le rayonnement CH de la flamme et/ou la température de la matière de la chambre de combustion, desquels résulte une information sur la pulsation de pression et/ou la position de la flamme et/ou la stabilité de la flamme.

7. Procédé selon la revendication 1, **caractérisé en ce que** dans la zone de recirculation intérieure (IRZ), on injecte du combustible pour stabiliser la flamme du brûleur.

8. Procédé selon la revendication 1 et 7, **caractérisé en ce que**, pour éviter une extinction de la flamme, on réduit l'injection de vapeur d'eau en amont du brûleur et on augmente l'injection de vapeur d'eau dans la zone de recirculation intérieure du brûleur, la génération de NOx étant encore réduite et des taux d'humidité élevés de l'incinérateur à turbine à gaz étant atteints.

9. Procédé selon la revendication 1, **caractérisé en ce que** dans la zone de recirculation intérieure de la chambre de combustion, on injecte de la vapeur d'eau pour influencer le temps de séjour des gaz réactifs dans la zone de recirculation intérieure, le comportement acoustique de la flamme du brûleur étant modifié, pour réduire des pulsations de pression.

10. Procédé selon la revendication 1, **caractérisé en ce qu'**on injecte de la vapeur d'eau derrière la flamme de la chambre de combustion, pour créer un profil de température adapté à la sortie de l'incinérateur à turbine à gaz.

11. Procédé selon la revendication 1 et 7, **caractérisé en ce qu'**on réduit la quantité de vapeur d'eau injectée en amont du brûleur et la quantité de vapeur d'eau injectée dans la zone de recirculation interne de la zone de combustion et on injecte de la vapeur d'eau derrière la flamme de la chambre de combustion, la génération de NOₓ étant encore réduite et des taux d'humidité élevés étant obtenus dans la chambre de combustion.

12. Procédé selon l'une quelconque des revendications précédentes, **caractérisé en ce qu'**on exploite la chambre de combustion par une association de mode de prémélange et de mode de diffusion.

13. Procédé selon l'une quelconque des revendications précédentes, **caractérisé en ce qu'**on injecte du gaz naturel ou des combustibles à faible teneur en hydrogène en amont de la sortie du brûleur dans l'incinérateur à turbine à gaz.
